# EUROPEAN PATENT APPLICATION

(11) **EP 2 233 362 A1**
(43) Date of publication of application: **29.09.2010**
(21) Application number: 09155970.8
(22) Date of filing: 24.03.2009
(51) Int. Cl.: B60R 9/06, B60R 9/10

(54) **A tow bar mountable support assembly**

(71) Applicant: Assistive Design & Development Ltd, Coventry West Midlands CV4 8AS (GB)
(72) Inventor: Brown, Phil John, Henley in Arden, Warwickshire B95 6AT (GB); Thomas, Edward Anthony, Redditch, Worcestershire B98 7YY (GB)
(74) Representative: Molony, Anna

(57) **Abstract**

A tow bar (11) mountable support assembly (10) is disclosed for transporting bicycles and the like. The support assembly (10) comprises coupling means (12) for coupling the support assembly (10) to a tow ball (13) arranged upon a tow hook (14) of the tow bar (11), and at least one support member (19,20,24). The at least one support member (19,20,24) is arranged to extend from the coupling means (12) to a position adjacent the tow hook (14) to substantially minimise any rotation of the support assembly (10) upon the tow ball (13), and thus substantially rigidly secure the secure assembly (10) to the tow bar (11).

## Description

The present invention relates to a tow bar mountable support assembly and particularly, but not exclusively to a tow bar mountable support assembly for transporting bicycles, motorcycles, wheelchairs, mobility scooters and the like.

Bicycles, motorcycles, wheelchairs, mobility scooters and the like are typically transported using trailers or racks. The racks are generally mounted directly upon the rear of a vehicle. However, mounting bicycles for example directly upon a vehicle can damage the vehicle and since such racks typically require the bicycles to be mounted upon each other in close proximity, it is common for the bicycles to bounce against each other and the car, and thus become damaged during transport.

It is also known to transport bicycles and wheelchairs, for example upon a rack that is mounted upon a vehicle roof. However, it can be difficult to lift bicycles and wheelchairs onto such racks, particularly if the wheelchair, for example, is heavy and/or if the vehicle is high.

Transporting bicycles, motorcycles, wheelchairs, mobility scooters and the like within a trailer that is coupled to a vehicle can overcome the above problems. However, it is often difficult to suitably manoeuvre a vehicle to subsequently manoeuvre the trailer and it can be difficult to locate a suitable parking space to accommodate a vehicle with such a trailer coupled thereto.

I have now devised a tow bar mountable support assembly for transporting bicycles and the like, which alleviates the above mentioned problems

In accordance with the present invention there is provided a tow bar mountable support assembly, the assembly comprising coupling means for coupling the assembly to a tow ball arranged upon a tow hook of the tow bar, and at least one support member,
**characterised in that**
the at least one support member is arranged to extend from the coupling means to a position adjacent the tow hook to substantially minimise any rotation of the assembly upon the tow ball.

The support assembly is thus restricted from rotating upon the tow ball by the support member and so the support assembly enables bicycles and the like to be securely supported upon a tow bar of a vehicle. Moreover, since the support assembly is mounted above the road surface, then there is no difficulty associated with reversing the vehicle as compared with reversing vehicle coupled trailers, for example.

The coupling means preferably comprises a socket for receiving the tow ball.

Preferably, the assembly comprises a first and second support member which are arranged to extend to a position either side of the tow hook. The first and second support members are preferably arranged to abut a flange to which the tow hook is coupled, to minimise any side-to-side rotation of the support assembly upon the tow ball.

Preferably, at least one of the first and second support members comprise a head section which is arranged to extend over the flange to minimise any up-down rotation of the support assembly upon the tow ball.

The support assembly preferably comprises at least one third support member which is arranged to extend between the first and second support member at the side of the tow hook that is opposite the side of the hook which in use, faces the tow bar.

Preferably, the at least one third support member is detachably coupled between the first and second support members. The at least one third support member preferably comprises a recess for receiving the tow hook.

Preferably, the recess is contoured to substantially match the curvature of the tow hook and thus further minimise any rotation of the support assembly upon the tow ball.

The support assembly preferably further comprises a flange which extends substantially around a periphery of the coupling means. Preferably, the flange comprises means for coupling with a support platform for supporting a body, such as a bicycle or wheelchair, for example.

Preferably, the means for coupling with the support platform comprises at least one actuator. The at least one actuator is preferably arranged to raise and lower the platform with respect to the tow bar, such that the platform can be lowered to enable a bicycle or motorcycle, for example, to be positioned thereon, and then suitably raised for transportation with a vehicle.

Preferably, the at least one actuator is hydraulically operated or electrically operated.

Alternatively, the means for coupling with the support platform preferably comprises a plurality of apertures which can receive fasteners, such as nuts and bolts to rigidly couple the platform to the flange.

The coupling means preferably comprises a tow hitch.

Embodiments of the present invention will now be described by way of example only and with reference to the accompanying drawings, in which:
Figure 1a is a perspective view of the support assembly according to a first embodiment of the present invention;
Figure 1b is a side view of a typical tow hook and tow ball;
Figure 2a is a side view of the "flange-ball" variety of tow hook and tow ball arrangement;
Figure 2b is a rear view of the "flange-ball" of figure 2a;
Figure 3a is a side view of the "swan-neck" variety of tow hook and tow ball arrangement;
Figure 3b is a rear view of the "swan-neck" of figure 3a;
Figure 4 is a plan view of the support assembly of figure 1a;
Figure 5 is a side view of the support assembly of figure 1a;
Figure 6 is a rear view of the support assembly of figure 1a;
Figure 7 is a rear view of the support assembly according to a second embodiment of the present invention, illustrating the arrangement of the bracket; and,
Figure 8 is a magnified view of the bracket of figure 7.

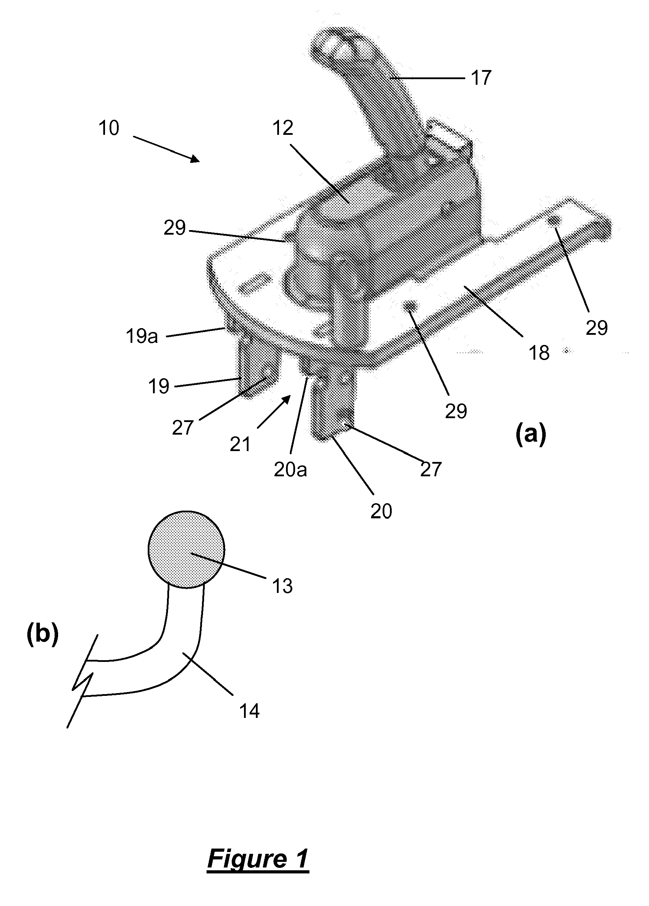

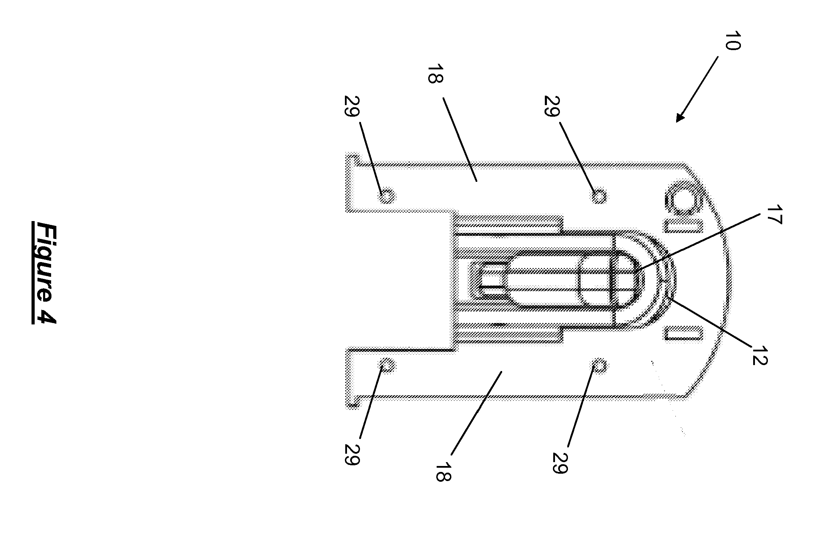

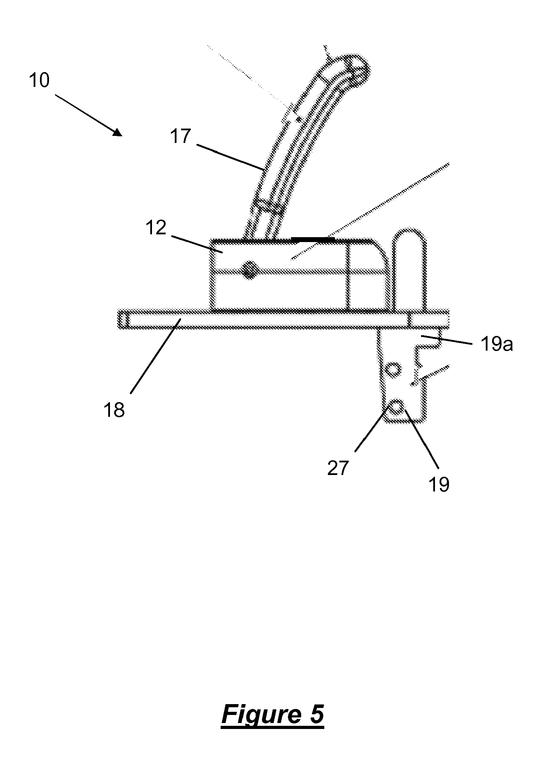

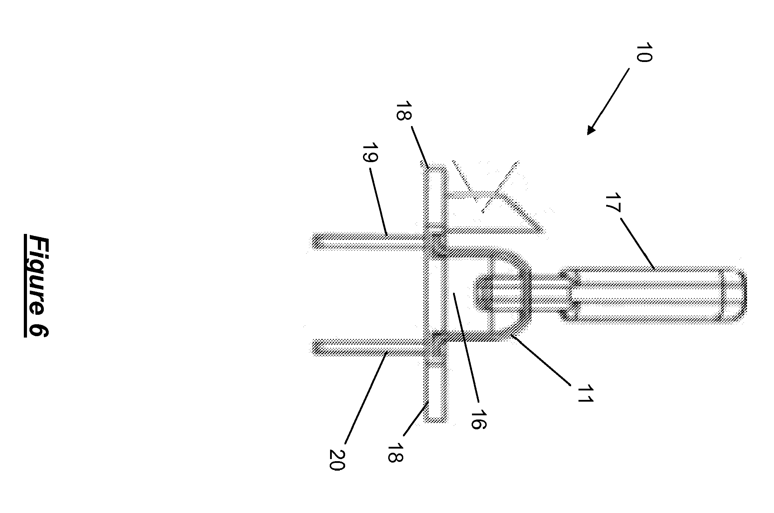

Referring to figures 1 to 6 of the drawings, there is shown a support assembly 10 according to a first embodiment of the present invention for supporting bicycles, motorcycles, wheelchairs, mobility scooters (not shown) and the like upon a tow bar 11 that is secured to a vehicle (not shown).

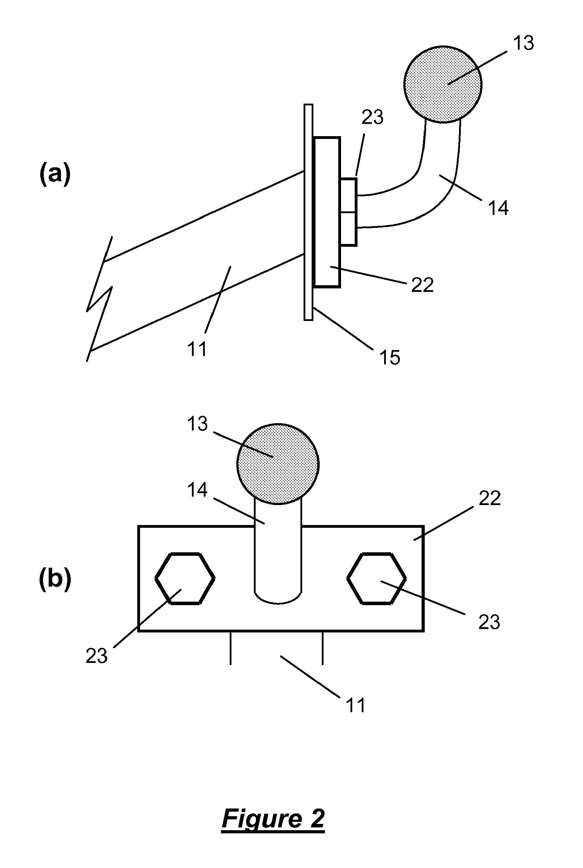

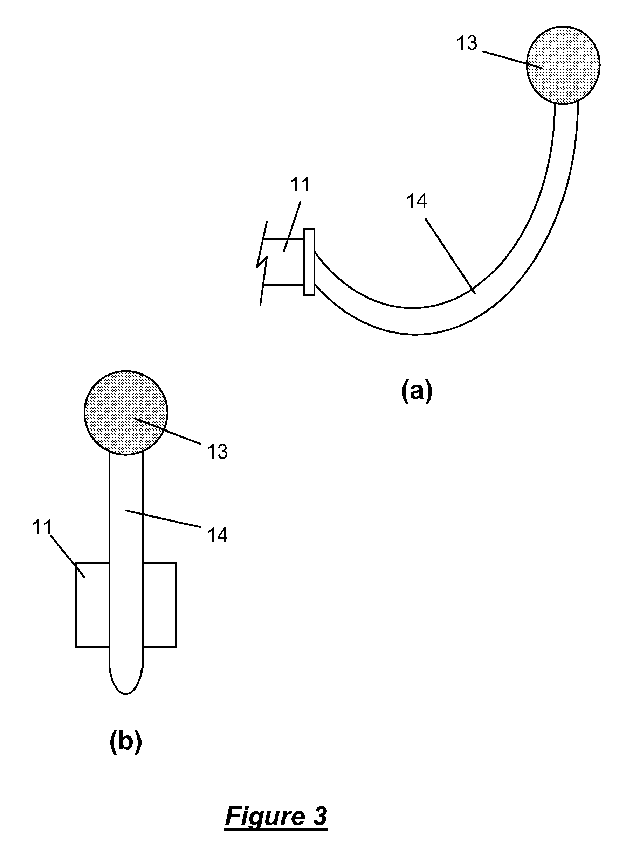

The support assembly 10 comprises a tow hitch 12 for coupling the assembly to a tow ball 13 that is mounted upon a tow hook 14. The tow hook 14 and tow ball 13 arrangement may comprise the so-called "*flange-ball*" variety, whereby the tow hook comprises a flange that enables the tow hook to be bolted to a plate 15 on the tow bar that extends to the rear of the vehicle, as shown in figure 2. Alternatively, the tow hook 14 and tow ball 13 arrangement may comprise the so-called "*swan-neck*" variety as shown in figure 3, whereby the tow hook 14 extends to the tow bar 11 underneath the vehicle.

The tow ball 13 of the *flange-ball* or *swan-neck* variety is received in a socket 16 formed on the underside of the tow hitch 12 and is locked therein by a locking arm (not shown) that is actuated by a lever 17. The locking arm (not shown) extends into the socket 16 from a position that is below the tow ball 13 and acts to restrict the size of the opening to the socket 16 and thus prevent the tow hitch 12 from becoming uncoupled from the tow ball 13.

The tow hitch 12 comprises a flange 18 which extends substantially around the periphery of the hitch 12 and from which extend a first and second support member 19, 20 or plate. The first and second support plates 19, 20 comprise a substantially L-shape and extend substantially perpendicular to the flange 18 from the underside thereof. The first and second support plates 19, 20 are arranged with the wide base 19a, 20a adjacent the underside of the flange 18 and are arranged substantially opposite each other and orientated substantially parallel to each other.

The support plates 19, 20 are displaced longitudinally of the support assembly 10 from the socket 16, toward the front of the assembly 10 and define a channel 21 which is arranged to receive a section of the tow hook 14. According to a first embodiment of the present invention whereby the support assembly 10 is adapted for use with the *flange-ball* variety of the tow hook and tow ball arrangement as shown in figure 2, the longitudinal separation of the socket 16 from the front edge of the support plates 19, 20 substantially corresponds to the separation of the tow ball 13 from the tow hook flange 22, such that when the tow ball 13 is positioned within the socket 16 on the tow hitch 12, the front edge of the support plates 19, 20 abut the tow hook flange 22 between the tow hook 14 and the flange bolts 23. The abutment serves to minimise any side-to-side rotation of the support assembly 10 upon the tow ball 13. The head section 19a, 20a of the first and second support plate 19, 20 is arranged to extend over the tow hook flange 22 to minimise any downward rotation of the support assembly 10 upon the tow ball 13.

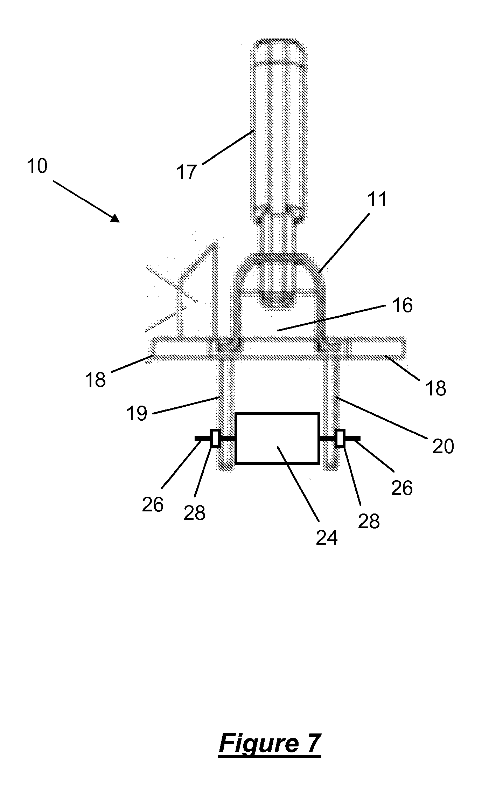

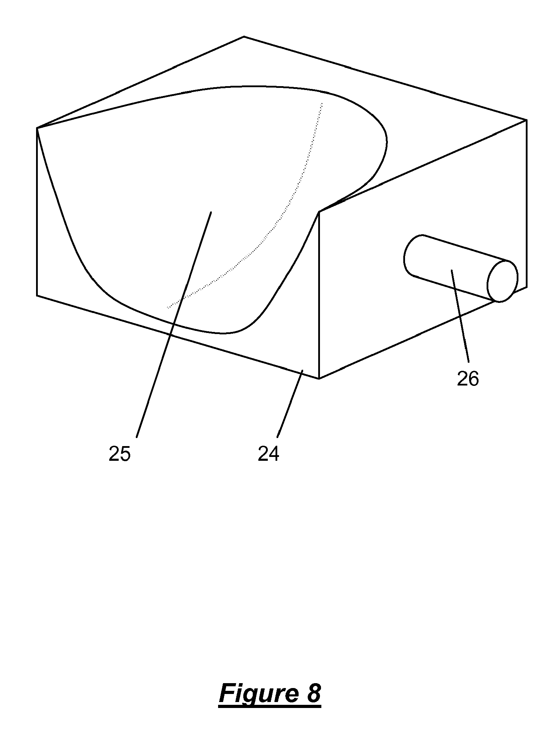

According to a second embodiment of the present invention, as shown in figures 7 and 8 of the drawings, whereby the support assembly 10 is adapted for use with the *swan-neck* variety of the tow hook 14 and tow ball 13 arrangement, the support assembly 10 further comprises a third support member, or bracket 24 having a recess 25 formed therein. The recess 25 comprises a contour which substantially matches the curvature of the tow hook 14. The bracket 24 comprises a first and second threaded arm 26 (only one of which is shown in figure 8) which extend from opposite sides of the bracket 24 and which are separately arranged to extend through an aperture 27 formed within the first and second support plate 19, 20, respectively. The bracket 24 is detachably secured to the support assembly 10 by passing nuts 28 or similar fasteners over each threaded arm 26 and tightening the nuts 28 against the support plates 19, 20.

The bracket 24 is arranged within the channel 21 defined by the first and second support plate 19, 20 such that when the tow ball 13 is positioned within the socket 16 of the tow hitch 12, the tow hook 14 extends within the recess 25 in the bracket 24. The curvature of the recess 25 is arranged to match the curvature of the tow hook 14, such that the bracket 24 restricts any rotation of the support assembly 10 upon the tow ball 13.

The support assembly 10 of the first or second embodiments further comprises a first and second actuator (not shown) mounted upon the flange 18 of the support assembly 10, and separately arranged either side of the tow hitch 12. The first and second actuators (not shown) couple a support platform (not shown) for supporting bicycles, for example, to the assembly 10. The actuators (not shown) are arranged to raise and lower the platform (not shown) with respect to the tow bar 11, such that a bicycle for example (not shown), or similar can be wheeled upon the platform (not shown) and secured thereto, and the platform (not shown) can then be subsequently lifted off the floor using the actuators (not shown). In an alternative embodiment, the support platform (not shown) may be directly coupled to the flange 18 of the support assembly 10, by passing bolts through the apertures 29 formed within the flange 18 and corresponding apertures (not shown) formed within the support platform (not shown) and subsequently passing nuts upon the bolts, for example.

From the foregoing therefore, it is evident that the tow bar mountable support assembly of the present invention provides a simple yet effect means of transporting bicycles, motorcycles, wheelchairs, mobility scooters and the like.

## Claims

1. A tow bar mountable support assembly, the assembly comprising coupling means for coupling the assembly to a tow ball arranged upon a tow hook of the tow bar, and at least one support member, **characterised in that**
the at least one support member is arranged to extend from the coupling means to a position adjacent the tow hook to substantially minimise any rotation of the assembly upon the tow ball.

2. A tow bar mountable support assembly according to claim 1, wherein the coupling means comprises a socket for receiving the tow ball.

3. A tow bar mountable support assembly according to claim 1 or 2, wherein the assembly comprises a first and second support member which are arranged to extend to a position either side of the tow hook.

4. A tow bar mountable support assembly according to claim 3, wherein the first and second support members are arranged to abut a flange to which the tow hook is coupled, to minimise any side-to-side rotation of the support assembly upon the tow ball.

5. A tow bar mountable support assembly according to claim 3 or 4, wherein at least one of the first and second support members comprise a head section which is arranged to extend over the flange to minimise any up-down rotation of the support assembly upon the tow ball.

6. A tow bar mountable support assembly according to any of claims 3 to 5, further comprising at least one third support member which is arranged to extend between the first and second support member at the side of the tow hook that is opposite the side of the hook which in use, faces the tow bar.

7. A tow bar mountable support assembly according to claim 6, wherein the at least one third support member is detachably coupled between the first and second support members.

8. A tow bar mountable support assembly according to claim 6 or 7, wherein the at least one third support member comprises a recess for receiving the tow hook.

9. A tow bar mountable support assembly according to claim 8, wherein the recess is contoured to substantially match the curvature of the tow hook.

10. A tow bar mountable support assembly according to any preceding claim further comprising a flange which extends substantially around a periphery of the coupling means.

11. A tow bar mountable support assembly according to claim 10, wherein the flange comprises means for coupling with a support platform for supporting a body.

12. A tow bar mountable support assembly according to claim 11, wherein the means for coupling with the support platform comprises at least one actuator.

13. A tow bar mountable support assembly according to claim 12, wherein the at least one actuator is arranged to raise and lower the platform with respect to the tow bar.

14. A tow bar mountable support assembly according to claim 12 or 13, wherein the at least one actuator is hydraulically operated or electrically operated.

15. A tow bar mountable support assembly according to any preceding claim, wherein the coupling means preferably comprises a tow hitch.
